# EUROPEAN PATENT APPLICATION

(11) **EP 1 819 162 A1**
(43) Date of publication of application: **15.08.2007**
(21) Application number: 05811541.1
(22) Date of filing: 29.11.2005
(51) Int. Cl.: H04N 7/16, H04N 7/173, G11B 20/10, H04N 5/91, G06F 21/24

(54) **VIDEO/AUDIO RECORDING SYSTEM, VIDEO/AUDIO RECORDING DEVICE, RECEIVING DEVICE, VIDEO/AUDIO RECORDING METHOD, AND VIDEO/AUDIO MANAGEMENT PROGRAM**

(30) Priority: 30.11.2004 JP 2004346701
(71) Applicant: NEC Corporation, Minato-ku Tokyo 108-8001 (JP)
(72) Inventor: TAJIME, Junji, Tokyo 1088001 (JP)
(74) Representative: Baronetzky, Klaus
(86) International application number: PCT/JP2005/021888
(87) International publication number: WO 2006/059601

(57) **Abstract**

Even if a content is under copy restriction for copyright protection, the content can be recorded by effectively using a recording area. Tuner control sections (11, 21) update use information (11a, 21a) in response to a request of use reservation and set a tuner use right. When a recording managing section (122) is instructed to perform multiple recording of a content, it acquires use information (11a, 21a) from the tuner control sections (11, 21) and check tuners (13, 23). The recording managing section (122) secures the tuner use right of the tuners (13, 23) used for recording and instructs a recorder (14) to record the content received by one of the secured tuners. A content managing section (121) records content management information (12a) including the number of secured tuners (13, 23) as the number of held contents.

## Description

### [TECHNICAL FIELD]

The present invention relates to a video/audio recording system, a video/audio recording device, and a video/audio recording method, each which records video/audio contents including video and audio. Particularly, the present invention relates to a video/audio recording system, a video/audio recording device, and a video/audio recording method, each which records contents on which various restrictions for copyright protection are imposed. Moreover, the present invention relates to a content management server, a receiving device and a recorder, in a video/audio recording system, and a video/audio management program for managing video/audio contents.

### [BACKGROUND OF THE RELATED ART]

Video/audio contents (for example, broadcast programs) including digital video and audio are distributed in ground wave digital broadcasting, satellite broadcasting (BS), streaming broadcast, etc. and a wide variety of contents using methods have been proposed. Various kinds of restrictions are imposed on the handling of contents for the purpose of the copyright protection of contents.

The non-patent document 1 discloses that a copy-once broadcasting is performed that broadcasts contents with a copy-once signal that permits one-time recording to apply copyright protection in the ground wave digital broadcasting and the BS digital broadcasting.

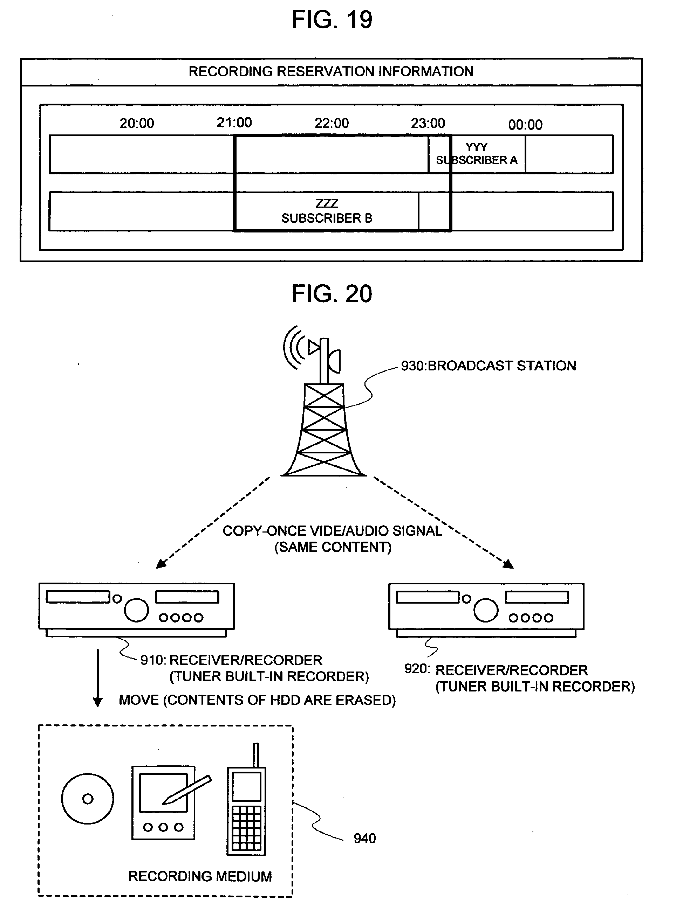

FIG. 20 is an explanatory diagram illustrating a copy-once broadcasting, which is performed in the ground wave digital broadcasting and the BS digital broadcasting. In the copy-once broadcasting, as shown in FIG. 20, a broadcast station 930 broadcasts video/audio contents, with copy-once signals added thereto. When a copy-once signal is added, a broadcast content can be videotaped (recorded) one-time only but a once recorded content cannot be further copied to another recording means (medium). In the case of the example of FIG. 20, receiving/recording means (for example, a tuner built-in recorder) 910, 920 can receive contents broadcast from the broadcast station 930 and can record them one-time only. However, the receiving/recording medium 910, 920 cannot further copy recorded contents into another recording means/medium.

Referring to FIG. 20, the receiving/recording means 910, 920 is, for example, a hard disk recorder (HDD recorder) or a DVD recorder, compatible with the copy-once broadcasting. When receiving a content, the receiving/recording means 910, 920 judges whether or not a copy-once signal is added to the content. If yes, the receiving/recording means 910, 920 controls such that the content is not further copied onto another recording means/medium, so that the copy-once broadcasting is realized.

Moreover, even contents, to which copy-once signals are added, can be moved (transferred) to another recording medium 940 (such as optical disk media typified by DVD±R, RW and magnetic recording medium typified by a hard disk) or to a device with recording means/medium (such as HDD recorder, DVD recorder, personal computer, PDA, cellular telephone, etc.). In such a case, the receiving/recording means 910, 920, as shown in FIG. 20, erases a content recorded by itself after the recording of the content onto the recording medium 940, thus allowing the movement of the content.

Non-patent document 1: (Feature) Synopsis of copy-once compatible states of recorders manufactured by nine corporations regarding ground/BS digital copy-once, [online] IMPRESS Co.,Ltd., [searched on October 18, 2004], Internet<URL:http://www.watch.impress.co.jp/av/docs/200404 12/copyl.htm>

### [DISCLOSURE OF THE INVENTION]

### [PROBLEMS TO BE SOLVED BY THE INVENTION]

However, in the copy-once broadcasting, disclosed in the non-patent document 1, even the case where a user wants copying a content for a private use is restricted. In such a case, to use the same content in various environments, a user has to copy plural same contents, using plural recording devices (DVD recorders, video recorders, personal computers, etc.).

For example, in order to store a content into a HDD recorder and an optical disk medium, two receiving/recording means (in this example, HDD recorders) 910 and 920 are prepared, as shown in FIG. 20. Thus, the same content has to be received and recorded using them, respectively. Then, the content recorded in the receiving/recording means 910 has to be moved into the optical disk medium. That process requires plural recording means to copy the same content, thus wastefully occupying the recording area.

Alternatively, a combination of single recording medium and plural receiving means allows plural same contents to be recorded. For example, using a recording device incorporating plural tuners (for example, a double HDD recorder), plural same contents may be recorded into the single recording device. However, recording plural same contents into a signal recording device leads to wastefully using recording areas to copy the same content.

An object of the present invention is to provide a video/audio recording system, a content management server, a video/audio recording device, a receiving device, a recording device, a video/audio recording method, and a video/audio management program, each which can record contents, with recording areas effectively used even when copy restriction is imposed on contents for copyright protection.

### [MEANS TO SOLVE THE PROBLEMS]

According to the present invention, in a video/audio recording system for recording a content which includes either video or audio or both and on which copy restriction is imposed (for example, a copy-once signal is added), the video/audio recording system comprises a plurality of content receivers (for example, tuners 13 and 23) each for receiving a content; receive count securing means (for example, the recording manager 122) for securing content receivers of the same number as the number of contents to be recorded when recording plural same contents is instructed; a content recorder (for example, the recorder 14) for recording a content; a hold count storage (for example, the hold count storage 121) for storing content hold count information (for example, content hold count information 12a) representing the number of contents held that is recorded by the content recorder; and a hold count manager (for example, the hold count storage 121) for managing the number of contents held that is recorded by the content recorder, based on the content hold count information stored by the hold count storage.
The content recorder records a content received by any one of content receivers secured by said receive count securing means. The hold count storage stores content hold count information including as a content hold count the number of content receivers secured by the receive count securing means.

The video/audio recording system further comprises content copying means (for example, a controller and an input/output in the receiving/recording device 10) for copying a content recorded by the content recorder to an external recorder. When the content copying means copies the content to the external recorder, the hold count manager subtracts the number of contents, copied by the external storage, from a hold count representing content hold count information stored by the hold count storage.
In such a configuration, the state where a sole content only is actually recorded does not change. However, by updating the content hold count information, that state can be handled as if one of plural contents in a hold state has been moved to another recording means.

The video/audio recording system further comprises use right setting means (for example, the tuner controller 11, 21) for setting a receiver use right (for example, a tuner use right) or a right for utilizing the content receiver. When recording plural same contents is instructed, the receive count securing means instructs the use right setting means to set a receiver use right to content receivers of the same number as the number of contents to be recorded.
By setting a use right, such a configuration can easily secure a content receiver, which is used to record contents.

The video/audio recording system further comprises a use reservation information storage (for example, the tuner controller 11, 21) for storing use reservation information (for example, the use reservation information 11a, 21a) representing a use reservation status of said content receiver. The use right setting means sets a receiver use right by adding a new use reservation content to use reservation information stored by the use reservation information storage, according to a request for content receiver use reservation. By reserving the use of a receiver, such a configuration can easily set a receiver use right.

In the video/audio recording system, the use reservation information storage stores, as use reservation information, use data and time (for example, a recording date and time) at which a content receiver is used and a use subject (for example, a use user), or a subject using the content receiver, in one-to-one correspondence. The use right setting means secures a receiver use right of the use subject by controlling such that a use request for the content receiver from a user, except the use subject, is not accepted at the use date and time, based on the use reservation information. Such a configuration can prohibit the use of a receiver by a user except a use subject at a use date and time and can secure a receiver use right.

In the video/audio recording system, the receive count securing means specifies a content receiver, to which a receiver use right is not set by the use right setting means, when recording plural same contents is instructed, judges whether or not the specified recording number (for example, a desired recording count N) is less than or equal the specified number of content receivers, secures content receivers of the same number as the specified recording number when it is judged that the specified recording number is less than or equal the number of specified content receivers, determines the number of content receivers to be secured according to a predetermined condition when it is judged that the specified recording number is larger than the number of specified content receivers, and secures content receivers of the determined number. When a desired value of a content recording count specified by a user is larger than the number of available receivers, such a configuration can adjust a content recording count.

When judging that a specified recording number is larger than the number of specified content receivers, the receive count securing means secures the specified content receivers. Even when a desired value of a content recording count specified by a user is larger than the number of available receivers, such a configuration can automatically set a content recording count.

The receive count securing means judges whether or not a priority is given to an instructed content according to a predetermined priority condition when judging a specified recording number is larger then the number of specified content receivers; instructs a use right setting means to change a receiver use right, which has been already set to the content receiver, when judging that a priority is given to the specified content; and thus secures content receivers of the same number of as the specified recording number. Such a configuration can preferentially reserve the recording of a specific content.

A video/audio recording system, which receives a content, on which copy restriction is imposed, including either video or audio or both, includes a plurality of content receivers for receiving a content, and a content recorder for recording said content, and a content management server (for example, the management server 50) for managing contents recorded by said content recorder. The content management server comprises receive count securing means for securing content receivers of the same number as the recording number of contents when recording plural same contents is specified; a hold count storage for controlling such that content hold count information representing the number of contents held that is stored by the content recording means is stored; and a hold count manager for managing the number of contents held that is stored by the content recorder based on content hold count information stored by the hold count storage.
The content recorder records a content received by any one of content receivers secured by the receive count securing means. The hold count storage stores content hold count information including as a content hold count the number of content receivers secured by the receive count securing means. Such a configuration can batch manage the recording of a content and a content hold count, using a server, and thus can record contents, with recording areas effectively used.

The wording, "managing a content(s)", in this specification, means that a single content is actually recorded but hold count information, for example, is changed as if one of contents in a hold state is handled as one moved to another recording means.

The content management server further comprises use right setting means (for example, the tuner controller 15) for setting a receiver use right or a right for utilizing the content receiver. When recording of plural same contents is instructed, the receive count securing means secures content receivers by setting a receiver use right corresponding to content receivers of the same number as the recording number of contents, to the use right setting means.
Since the server can batch manage a use right of each content receiver, such a configuration can control such as the use of each content receiver does not concentrate locally, so that each content receiver can be effectively utilized.

According to the present invention, in a video/audio recording device, which records a content, in a system including a plurality of content receivers, each which receives a content which includes either video or audio or both and on which copy restriction is imposed, the video/audio recording device comprises, receive count securing means for securing content receivers of the same number as the content recording number when recording plural same contents is instructed; a content recorder for recording a content; a hold count storage for storing content hold count information representing the number of contents held that is stored by the content recorder; and a hold count manager for managing the number of contents held that is stored by the content recorder, based on content hold count information stored by the hold count storage.
The content recorder records a content received by any one of content receivers secured by the receive count securing means. The hold count storage stores content hold count information including, as a content hold count, the number of content receivers secured by the receive count securing means.

According to the present invention, in a receiving device, which records a content, in a video/audio recording system, which records said content which includes either video or audio or both and on which copy restriction is imposed, the receiving device comprises a content receiver for receiving the content and use right setting means for setting a receiver use right, or a right for using the content receiver. Such a configuration can easily secure a content receiver used to record contents in a video/audio recording system, using a use right.

The receiving device further comprises a use reservation information storage for storing use reservation information representing a use reservation status of the content receiver. The use reservation information storage stores, as use reservation information, use data and time at which said content receiver is used, and a use subject, or a subject using the content receiver, in one-to-one correspondence. The use right setting means secures a receiver use right of the use subject by controlling such that a use request for the content receiver from a user, except the use subject, is not accepted at the use data and time, based on the use reservation information. Such a configuration can prohibit the use of a receiver by a user except a use subject at a use date and time can secure a receiver use right.

According to the present invention, a video/audio recording method for recording contents, in a system including a plurality of content receivers, each which receives a content which includes either video or audio or both and on which copy restriction is imposed, comprises the steps of securing content receivers of the same number as the content recording number when recording plural same contents is instructed; recording a content received by any one of the content receivers secured; storing content hold count information including, as content hold count, the number of the content receiver secured; and managing the recorded content hold count, based on content hold count information stored.

The video/audio recording method defined further comprises the step of, when recording of plural same contents is instructed, setting a receiver use right, or a right for using the content receiver, corresponding to content receivers of the same number as the recording number of contents, to secure the content receiver. Such a configuration can easily secure a content receiver used to record a content, by setting a use right.

According to the present invention, a video/audio management program for managing contents, in a recording system including a plurality of content receivers, each which receives a content which includes either video or audio or both and on which copy restriction is imposed, and a recorder for recording said content, instructs a computer to execute the steps of securing content receivers of the same number as the content recording number when recording plural same contents is instructed; recording a content received by any one of the content receivers secured, into the recorder; storing content hold count information including, as content hold count, the number of the content receivers secured; and managing the content hold count recorded in the storage, based on the content hold count information stored.

### [EFFECT OF THE INVENTION]

According to the present invention, when recording of plural same contents is instructed, content receivers of the same number as a content recording count are secured. A content received by any one of content receivers secured is recorded. Content hold count information, which includes the number of secured content receivers as a content hold count, is recorded. For that reason, a single content is actually recorded but can be handled as if plural same contents are held. Therefore, even when copy restriction is imposed on a content for copyright protection, the content can be recorded with the recording area effectively utilized.

### [BRIEF DESCRIPTION OF THE DRAWINGS]

[FIG. 1] FIG. 1 is an explanatory diagram illustrating the application concept of a video/audio recording system according to the present invention.
[FIG. 2] FIG. 2 is an explanatory diagram showing the application concept of a video/audio recording system when a video/audio content is subjected to streaming.
[FIG. 3] FIG. 3 is a block diagram showing the fundamental configuration of a video/audio recording system.
[FIG. 4] FIG. 4 is a block diagram illustrating the configuration of a video/audio recording system.
[FIG. 5] FIG. 5 is an explanatory diagram illustrating use reservation information 11a, 21a to be recorded by the tuner controller 11, 21.
[FIG. 6] FIG. 6 is an explanatory diagram illustrating content hold count information 12a stored by the hold count storage 121.
[FIG. 7] FIG. 7 is a block diagram illustrating a specific configuration of the video/audio recording system shown in FIG.4.
[FIG. 8] FIG. 8 is a flowchart illustrating a recording process for recording plural contents, each to which a copy-once signal is added.
[FIG. 9] FIG. 9 is an explanatory diagram illustrating an input window for recording reservation, displayed by the receiving/recording device 10.
[FIG. 10] FIG. 10 is an explanatory diagram illustrating an input window for permission/refusal of use reservation change, displayed by the receiving device 20.
[FIG. 11] FIG. 11 is an explanatory diagram illustrating an input window for priority reservation of content recording.
[FIG. 12] FIG. 12 is an explanatory diagram illustrating reservation window information representing a reservation state of each tuner 13, 23.
[FIG. 13] FIG. 13 is an explanatory diagram showing another example of an input window for priority reservation of content recording.
[FIG. 14] FIG. 14 is an explanatory diagram illustrating a flow of information when a reserved content is recorded.
[Fig. 15] FIG. 15 is a block diagram illustrating another specific configuration of the video/audio recording system shown in FIG. 4.
[FIG. 16] FIG. 16 is a block diagram illustrating a specific configuration of a video/audio recording system linked via a network.
[FIG. 17] FIG. 17 is a block diagram illustrating anther configuration of a video/audio recording system.
[FIG. 18] FIG. 18 is an explanatory diagram illustrating a further another example of an input window for priority reservation of content recording.
[FIG. 19] FIG. 19 is an explanatory diagram illustrating a recording reservation information window for changing the setting of recording reservation.
[FIG. 20] FIG. 20 is an explanatory diagram illustrating a copy-once broadcast, which is carried out through a ground wave digital broadcast or a BS digital broadcast.

### [EXPLANATION OF SYMBOLS]

- 10: Receiving/recording device
- 11, 21: Tuner controller
- 11a, 21a: Use reservation information
- 12: Content/recording manager
- 12a: Content hold count information
- 12b: Recording schedule
- 13, 23: Tuner
- 14: Recorder
- 20: Receiving device
- 30: Broadcast station
- 40: Recording means/medium
- 121: Hold count storage
- 122: Recording manager
- 141: Recording medium

### [BEST MODE FOR CARRYING OUT THE INVENTION]

### Embodiment 1:

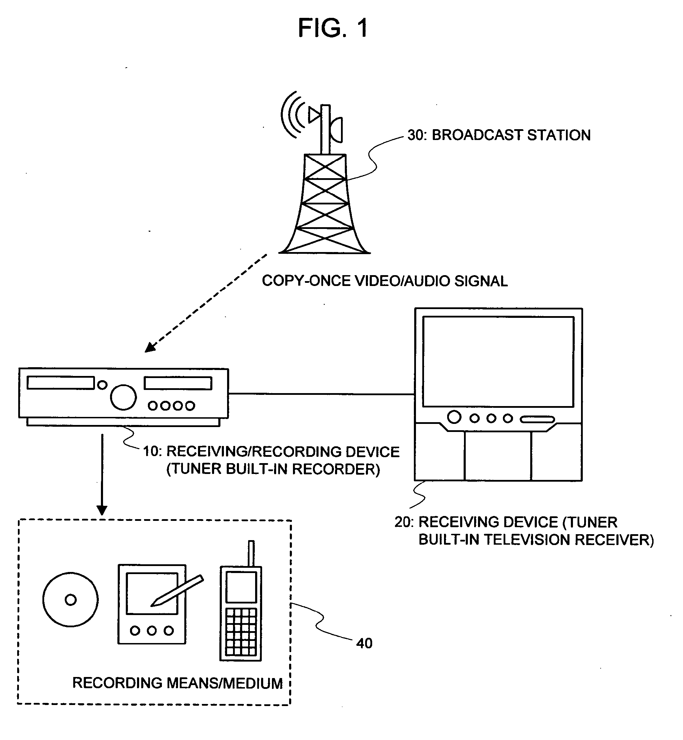

A first embodiment according to the present invention will be explained below by referring to the attached drawings. First, the application concept of a video/audio recording system of the present invention will be explained. FIG. 1 is an explanatory diagram illustrating the application concept of a video/audio recording system. In the present embodiment, a broadcast station 30 broadcasts video/audio contents (for example, broadcast programs, hereinafter, merely referred to as "content(s)"), including digital video and audio in the ground wave digital broadcast or BS digital broadcast. The broadcast station 30 also performs a copy-once broadcast that broadcasts contents with copy-once signals, allowing a content to be recorded only once.

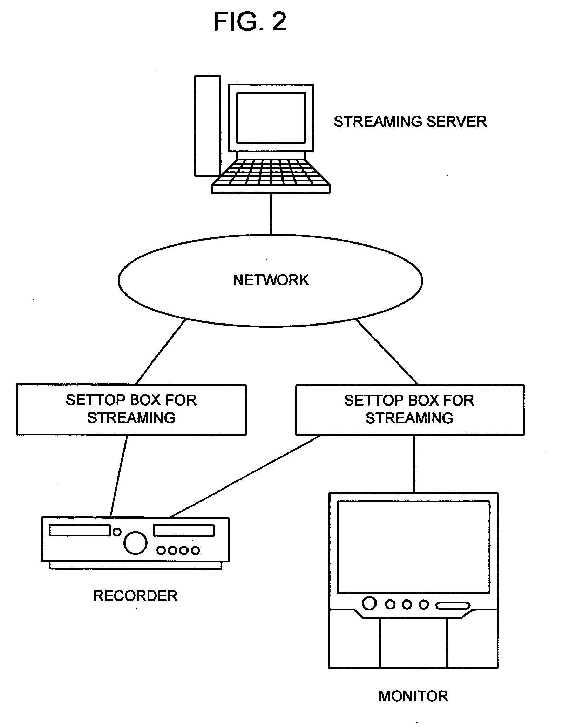

FIG. 1 imaginatively depicts broadcasting carried with broadcast waves. A broadcast station 30 is a streaming server which holds video/audio contents but may be the configuration that performs the streaming of video/audio contents to a receiving/recording device via communication means such as the Internet. FIG. 2 is an explanatory diagram illustrating an application concept of a video/audio recording system when a video/audio content is subjected to streaming. For streaming, as shown in FIG. 2, a streaming server transmits contents to a recorder or monitor via a network such as the Internet and via a streaming set-top box.

The video/audio recording system includes at least one recorder and at least two receivers. For example, the video/audio recording system includes a receiving/recording device 10 such as a tuner built-in recorder and a receiving device 20 such as a tuner built-in television receiver. That is, the video/audio recording system includes as recording means the recorder (recording section) of a receiving/recording device 10. Each of the receiving/recording device 10 and the receiving device 20 includes a tuner as receiving means.

In order to record plural same contents, the receiving/recording device 10 specifies all of receivers (tuners) available at a recording date and time. The receiving/recording device 10 secures a use right, or a right for using a receiver, (hereinafter referred to as a receiver use right or a tuner use right) to a specific receiver. For example, when the receiving/recording device 10 and the receiving device 20 are specified as available receiving means, the receiving/recording device 10 secures the receiver use right of the receiving/recording device 10 and the receiving device 20.

In the present embodiment, the number of the same contents, on which a copy-once signal is added, can be held and determined by the number of secured receiver use rights. For example, when the receiver use right for two receivers is secured, the video/audio recording system receives a content, thus handling it as if two recorded contents are held.

The receiving/recording device 10 records the content received from the broadcast station 30, using any one of receivers, which has acquired a receiver use right. For example, the receiving/recording device 10 receives and videotapes (or records) contents using a receiver built therein. That is, even if being instructed to record plural same contents (two same contents, in this embodiment), the receiving/recording device 10 records only one of them using one receiver. The video/audio recording system controls such that the use of a receiver (or a tuner incorporated in the receiving device 20 in the present embodiment), except the receiver used for recording, of receivers which has acquired a receiver use right, is prohibited during content recording.

After recording, the receiving/recording device 10 records content hold count information to manage the recorded content. In the receiving/recording device 10 of the present embodiment, a hold count storage stores and manages the hold count information regarding the hold count of recorded contents. In the present embodiment, the receiving/recording device 10 records the content hold count information, regarding that two contents, not permitted in copying, are held. In the present embodiment, by managing contents using the content hold count information, the receiving/recording device 10 actually records only one content but the recording is handled as if the receiving/recording device 10 holds the same contents of two.

For example, when moving a content to another recording means/medium 40 (such as DVD recorder, PDA, cellular telephone, or optical disk medium), the receiving/recording device 10 records the content into the recording means/medium 40 and then updates the content hold count information to "one copy-not-permitted content held". In other words, the receiving/recording device 10 actually records only one content but that recording is handled as if one of two contents has been moved to another recording means/medium 40, by updating the content hold count information.

Next, the configuration of the video/audio recording system will be explained below. The video/audio recording system may include plural recorders and plural receivers. However, in the present embodiment, the basic configuration of a video/audio recording system, including one recorder and two receivers, will be explained here. The recorder and each receiver may be disposed respectively or the recorder and all the receivers may be combined integrally as one unit. Alternatively, the recorder and either receiver may be realized integrally as one unit.

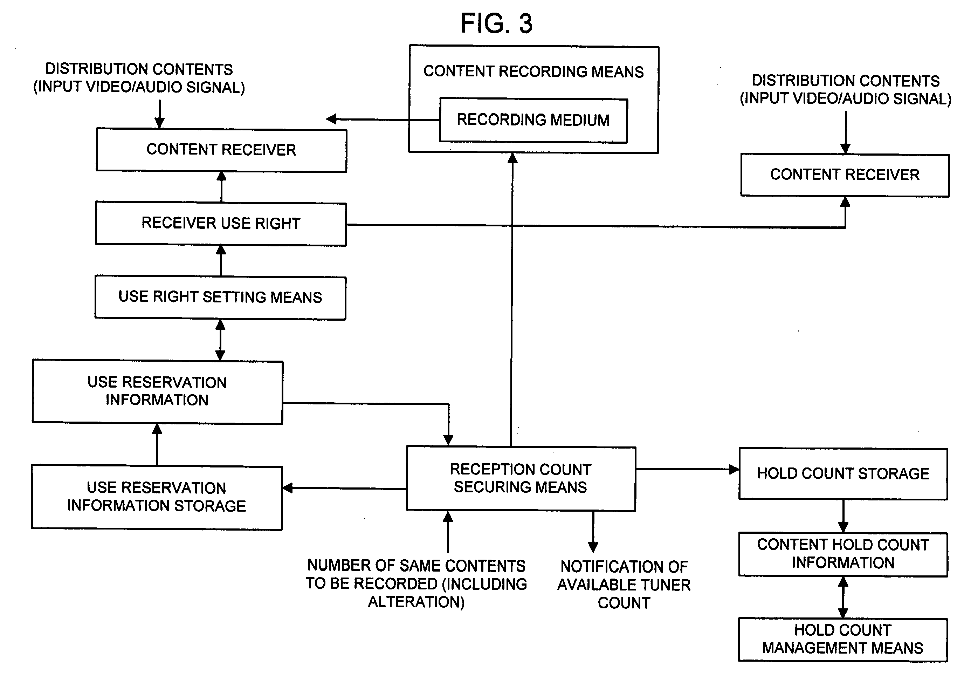

FIG. 3 is a block diagram illustrating the fundamental configuration of a video/audio recording system. As shown in FIG. 3, the video/audio recording system includes plural content receivers (two content receivers in the present embodiment) for receiving contents and a content recorder for recording contents. The video/audio recording system also includes a receive count securing means that secures content receivers of the same number as a content recording count when plural recording the same content is instructed. The video/audio recording system further includes a hold count storage for storing content hold count information representing the number of contents held that is recorded by the content recorder. Moreover, the video/audio recording system includes a hold count manager that manages the number of contents held that is stored in the content recorder, based on the content hold count information stored in the hold count storage.

In the video/audio recording system of the present embodiment, the content recorder records contents received by one of content receivers secured by the receive count securing means. The hold count storage stores content hold count information including, as a content hold count, the number of content receivers secured by the receive count securing means.

Moreover, the video/audio recording system includes use right setting means for setting a receiver use right, or a right for using a content receiver, and use reservation information storage for storing use reservation information representing a use reservation state of a content receiver. In the present embodiment, the use right setting means adds a new use reservation content to the use reservation information stored in the use reservation information storage, according to a content receiver use reservation request, and thus sets a receiver use right.

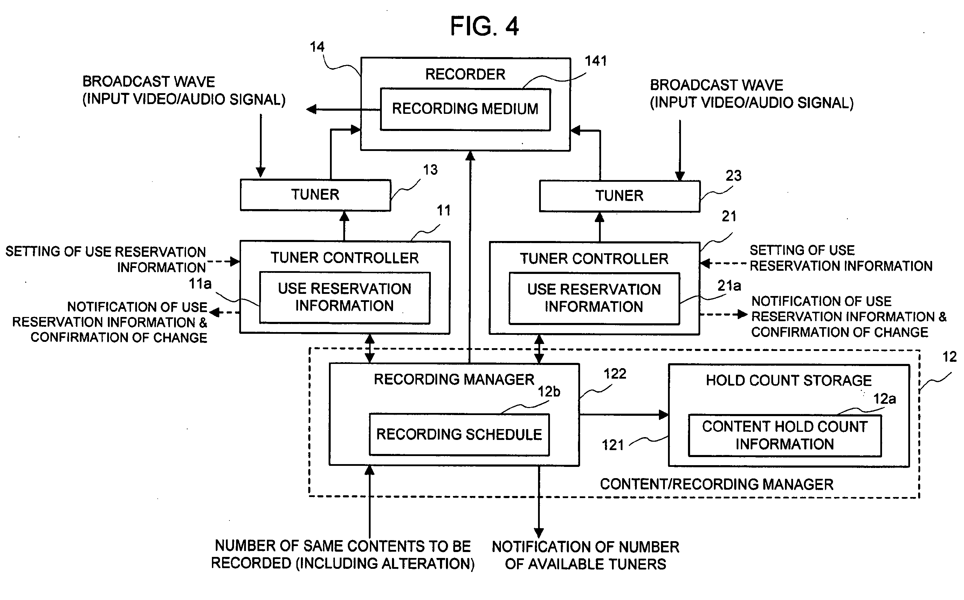

FIG. 4 is a block diagram illustrating the configuration of a video/audio recording system. As shown in FIG. 4, the video/audio recording system includes two tuners 13 and 33, two tuner controllers 11 and 21, a content/recording manager 12, and a recorder 14.

Specifically, the tuner (receiver) 13, 23 is the tuner, which is mounted on a HDD recorder, DVD recorder, video recorder, or television receiver. The tuner 13, 23 has the function that receives a content, to which a copy-once signal is added, which is broadcast by the broadcast station 30.

The tuner controller 11, 21 is specifically realized with the controller of a television receiver. With an integral construction of the recorder and the receiver, the tuner controller 11, 21 can be realized with the controller of a HDD recorder, DVD recorder, or video recorder, in which a tuner is mounted.

The tuner controller 11, 21 has the function of setting a tuner use right to the tuner 13, 23. In the present embodiment, the tuner controller 11, 21, as shown in FIG. 4, stores the use reservation information 11a, 21a, or information representing a use reservation state of the tuner 13, 23, into the memory. The tuner controller 11, 21 adds a new use reservation content to the use reservation information 11a, 21a according to a use reservation request for the tuner 13, 23, thus setting a tuner use right.

The tuner controller 11, 21 manages the use of the tuner 13, 23, based on the use reservation information 11a, 21a. For example, when the use of the tuner 13, 23 is required, the tuner controller 11, 21 judges whether or not use reservation has been already made in the time slot of the use request, based on the use reservation information 11a, 21a. When the use reservation has been already made, the tuner controller 11, 21 secures the tuner use right by controlling such that accepts other use requests are not accepted. For example, when priority reservation is requested, the tuner controller 11, 21 may accept it even if there is use reservation.

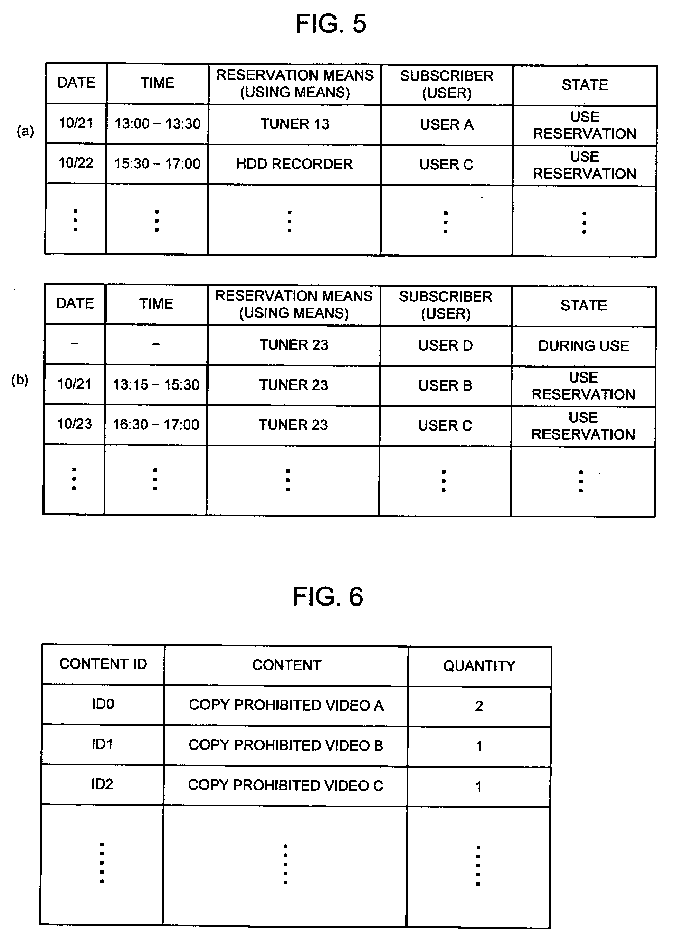

FIG. 5 is an explanatory diagram illustrating use reservation information 11a, 21a stored in the tuner controller 11, 21. FIG. 5(a) illustrates use reservation information 11a stored in the tuner controller 11. FIG. 5(b) illustrates use reservation information 21a stored in the tuner controller 21. As shown in FIG. 5, the tuner controller 11, 21 stores information regarding use date, use time, reservation means (using means), subscriber (user), and use state (for example, "use reservation") as the use reservation information 11a, 21a, in one-to-one correspondence.

FIG. 5(a), for example, shows that, by operating the HDD recorder, the user C made use reservation (for example, recording reservation) over 15:30 - 17:00 on October 22. A different user can make use reservation, using the same recorder. FIG. 5(b), for example, shows that, by operating the tuner 23, the user B (for example, father) made use reservation on October 21 and that, by using the tuner 23, the user C (for example, daughter) made use reservation on October 22. In that case, the tuner controller 11, 21 stores use reservation information 11a, 21a including subscriber information input by depressing the user button attached on the remote controller.

When the tuner 13, 21, for example, is in use right now, the tuner controller 11, 21 may store the state of the use reservation information 11a, 21a as "in use". For example, as shown in FIG. 5(b), when the user D is now using the tuner 23, the tuner controller 21 stores the use reservation information 21a including the use state as "in use".

FIG. 5(a) shows that, using the tuner 13, the user A made use reservation over 13:00 - 13:30 on October 21. Moreover, FIG. 5(a) shows that, using the recorder (for example, an HDD recorder), the user C made use reservation over 15:30 - 17:00 on October 22. Moreover, FIG. 5 shows that the tuner 13, 23, which has been made use reservation over 13:15 - 13:30 on October 21, cannot be used. Moreover, FIG. 5 shows that only one tuner can be used over 13:00 - 13:15 on October 21 and over 15:30 - 17:00 on October 22 and over 16:30 - 17:00 on October 23.

The tuner controller 11, 21 has the function of registering and changing information about a use reservation content into the use reservation information 11a, 21a, according to an input indication of a user using the tuner 13, 23 (hereinafter, referred to as a tuner user). When a use request is sent by the user of the recorder, the tuner controller 11, 21 registers and changes information about the use reservation content into use reservation information 11a, 21a according to an indication from the recording manager 122 (to be described later). In the present embodiment, the tuner controller 11, 21 registers information regarding use date and time and user name of the tuner 13, 23 into the use reservation information 11a, 21a.

The tuner controller 11, 21 makes the tuner 13, 23 receive the content broadcast from the broadcast station 30 according to an input indication by a tuner user. In the case of reservation recording, the tuner controller 11, 21 makes the tuner 13, 23 receive the content broadcast from the broadcast station 30 according to an indication from the recording manager 122. The tuner controller 11, 21 outputs or transmits the use reservation information 11a, 21a to the recording manager 122, according to a request from the recording manager 122.

Specifically, the content/recording manager 12 is the controller for a HDD recorder, DVD recorder, or video recorder. The content/recording manager 12 includes a hold count storage 121 for managing contents, and a recording manager 122 for controlling recording and managing recording reservation schedules.

The hold count storage 121 has the function of recording content hold count information representing the number of contents held that is recorded by the recorder. The hold count storage 121 has the function of managing the number of contents held that is recorded by the recorder, based on the content hold count information.

In the present embodiment, the hold count storage 121 stores the content hold count information 12a into a memory, as shown in FIG. 4. The hold count storage 121 manages contents to be recorded in the recorder, based on the content hold count information 12a. In the present embodiment, the hold count storage 121 handles only one content to be actually recorded in the recorder 14, based on the content hold count information 12a, as if it holds plural contents. Moreover, the hold count storage 121 updates the content hold count information 12a according to an indication from the recording manager 122.

FIG. 6 is an explanatory diagram illustrating the content hold count information 12a stored in the hold count storage 121. As shown in FIG. 6, the hold count storage 121 records, as the content hold count information 12a, content ID, content name, and content quantity, in one-to-one correspondence. In FIG. 6, the recorder actually records only one content of ID[IDO] but it is handled as if the hold count storage 121 holds two contents of ID[IDO].

The recording manager 122 records the content received by the tuner 13, 23 in the recorder 14 according to an indication of recording reservation by a user using a recorder (for example, a user of a HDD recorder, DVD recorder, or video recorder or a recorder itself, hereinafter referred to as a recorder user).

The recording manager 122 secures tuners 13, 23 of the same number as the number of contents when a recorder user instructs to record plural same contents. In the present embodiment, the recording manager 122 secures the tuner use rights of the tuners 13, 23 of the same number as the number of contents. The recording manager 122 records into the recorder 14 contents received by any one of secured tuners 13, 23. That is, the recording manager 122 records only one of record-instructed contents to the recorder 14. In that case, the recording manager 122 instructs the hold count storage 121 to update the content hold count information 12a, according to the number of recorded contents. In the present embodiment, the recording manager 122 records, as the content hold count information 12a, information including the number of secured tuners 13, 23 as a content recording count (hold count).

In the present embodiment, when being instructed to record plural same contents, the recording manager 122 judges whether of not each tuner 13, 23 is available at recording date and time. In that case, the recording manager 122 requires the use reservation information 11a, 21a in each tuner controller 11, 21. The recording manager 122 judges whether or not each tuner 13, 23 is available at a recording date and time based on the use reservation information 11a, 21a input or received from each tuner controller 11, 21. That is, the recording manager 122 judges whether or not the tuner controller 11, 21 has already set a tuner use right to each tuner 13, 23 at a recording date and time.

The recording manager 122 obtains the number of available tuners 13, 23 at a recording date and time. When the number of available tuners does not reach a desired recording count specified by the user, the recording manager 122 adjusts the number of contents to be recorded. For example, the recording manager 122 specifies the tuner 13, 23 to which a tuner use right is not set by the tuner controller 11, 21 at a recording date and time and thus judges whether or not a desired recording count specified by the user is less than or equal the number of specified tuners 13, 23. When judging that the desired recording count is larger than the number of specified tuners 13, 23, the recording manager 122 adjusts the number of contents to be recorded, according to predetermined conditions.

The recording manager 122 stores the recording schedule 12b representing recording reservation into a memory. For example, the recording manager 122 stores recording date and time, recording channel, recording count of recording program names, and tuners to be used, in one-to-one correspondence. The recording manager 122 records contents specified at the reserved recording date and time, based on the recording schedule 12b.

Information included in the recording schedule 12b is not restricted to only the information in the present embodiment. For example, the recording manager 122 may record the recording schedule 12b including subscriber information representing subscribers. The recording manager 122 may manifest subscribers on a monitor, together with the schedule, according to the operation instructed by a user. The recording manager 122 may receive the use reservation information 11a, 21a from the tuner controller 11, 21, according to the operation instructed by a user, thus displaying a subscriber based on the subscriber information included in the use reservation information 11a, 21a.

In concrete, the recorder (recording means) 14 is a recording section of a HDD recorder, DVD recorder, or video recorder. The recorder 14 also has the function of recording contents received by the tuner 13, 23 into the recording medium 141, such as hard disk, optical disk medium, or video tape, according to the instruction from the recording manager 122.

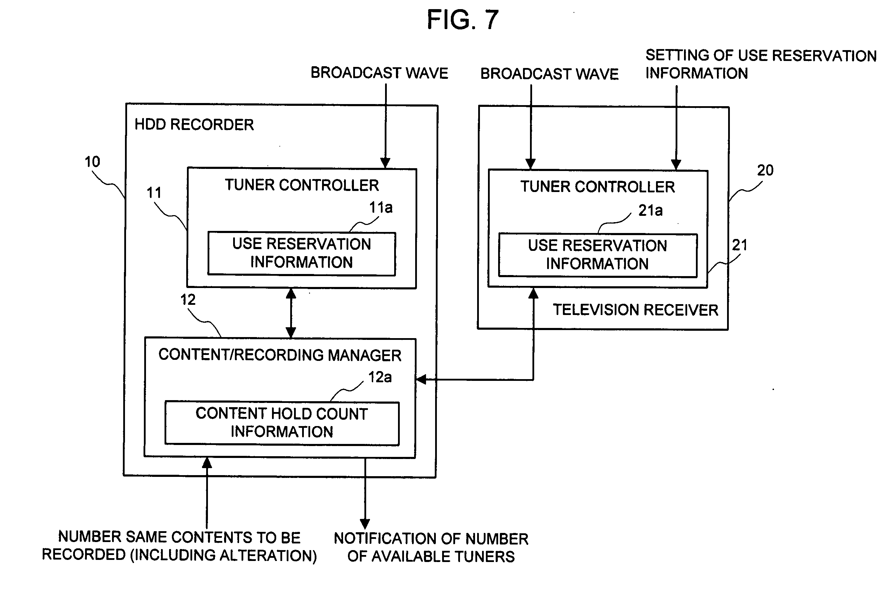

FIG. 7 is a block diagram illustrating a specific configuration of the video/audio recording system shown in FIG. 4. FIG. 7 illustrates the case where a recorder and one receiver are integrally realized as one unit. As shown in FIG. 7, the video/audio recording system includes a receiving/recording device 10 and a receiving device 20. The receiving/recording 10 and the receiving device 20 are linked via a communication network such as LANs or the Internet.

Specifically, the receiving/recording device 10 is a HDD recorder, DVD recorder, or video recorder. FIG. 7 illustrates the receiving/recording device 10, which is a HDD recorder. The receiving/recording device 10, as shown in FIG. 7, includes a tuner controller 11 and a content/recording manager 12.

The receiving/recording device 10, including a tuner, receives a content, to which a copy-once signal is added, broadcast by the broadcast station 30. The receiving/recording device 10 records received contents. That is, in the present embodiment, the receiving/recording device 10 includes one receiver, together with a recorder.

Specifically, the receiving device 20 corresponds to a television receiver. As shown in FIG. 7, the receiving device 20 includes a tuner controller 21. The receiving device 20, having a tuner, receives a content, to which a copy-once signal is added, broadcast by the broadcast station 30. That is, the receiving device 20 includes one receiver. The receiving device 20 manifests an image on a monitor, based on the received content, and reproduces audio.

Next, the operation of the video/audio recording system, which includes receiving/recording device 10 and the receiving device 20, as shown in FIG. 7, will be explained. In the video/audio recording system, the tuner controller 21 updates the use reservation information 21a at any time according to the input indication for use reservation from a tuner or recorder user. The tuner controller 11 updates the use reservation information 11a at any time according to an input indication of use reservation from a recorder user. That is, the tuner controller 11, 21 sets or changes a tuner use right at any time according to a request indication of use reservation from a tuner or recorder user.

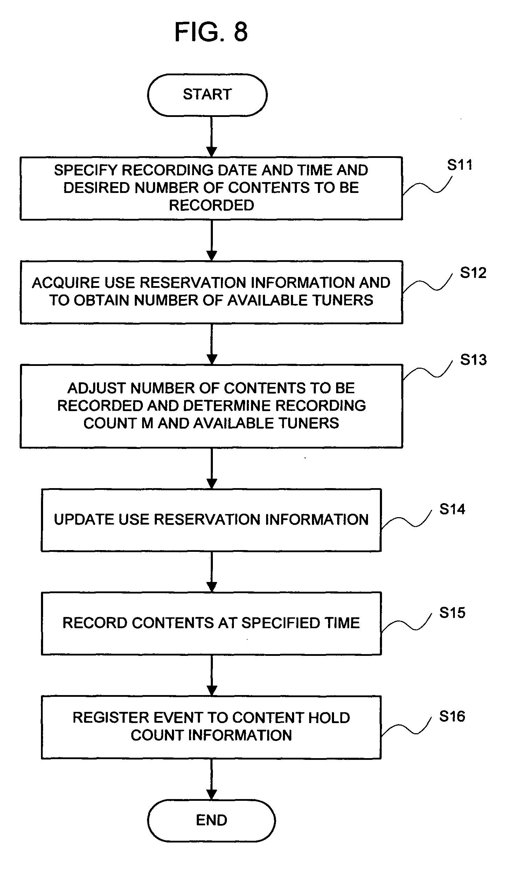

FIG. 8 is a flow chart showing an example of a recording process for recording plural contents, each to which a copy-once signal is added. In the present embodiment, the case will be explained where reservation recording is made according to an input instruction from a reorder user and plural contents are recorded at a recording date and time according to the reservation content. Without being limited to the case of reservation recording, the video/audio recording system may record plural contents from a current time according to an input indication from a recorder user.

For recording a content, the recorder user (for example, a user of the HDD recorder shown in FIG. 7) operates the receiving/recording device 10 to indicate the inputting of a content recording date and time or a desired recording count. The recording manager 122 in the receiving/recording device 10 inputs the content recording date and time and a desired content recording count N, according to an input instruction from a recorder user (step S11). The recording manager 122 inputs as desired recording count N a value equal to or less than the number (two in the present embodiment) of receivers included at least in the video/audio recording system.

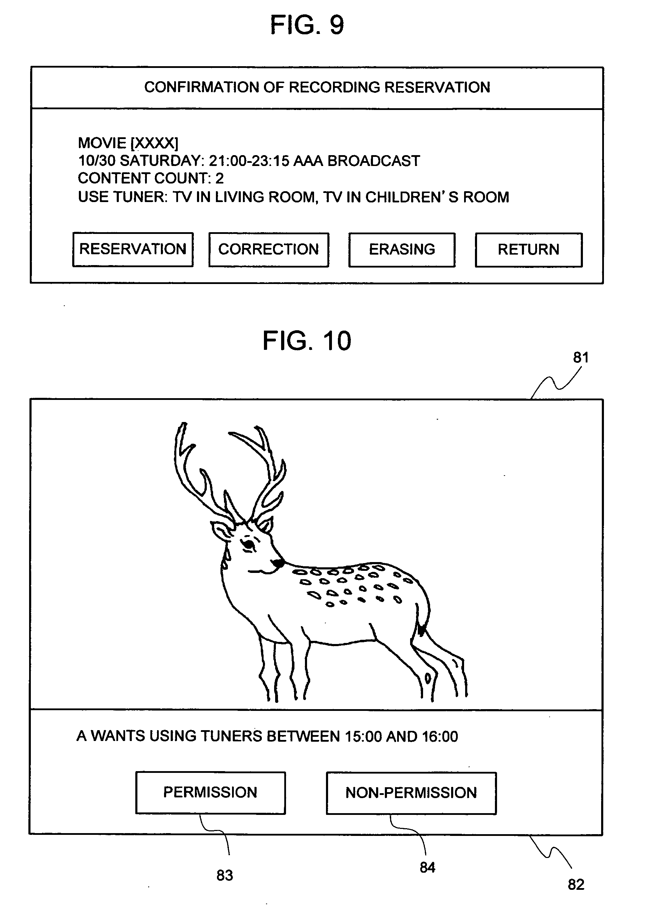

In step S11, the recording manager 122, for example, displays the input window for recording reservation on the monitor in the receiving/recording device 10. FIG. 9 is an explanatory diagram illustrating an example of an input window for recording reservation displayed by the receiving/recording device 10. A user instructs to input a content name, recording date and time, desired recording count N, and use desired tuner, via the input window shown in FIG. 9. Thus, the recording manager 122 inputs a content name, recording date and time, desired recording count N, and use desired tuner.

The use desired tuner may be manually selected by a recorder user or may be automatically selected by means of the recording manager 122. For automatic selecting a use desired tuner, a priority, for example, is previously set to each tuner 13, 23. Thus, the recording manager 122 selects a use desired tuner according to the tuner priority. For example, the recording manager 122 may retrieve a tuner available at a recording date and time and may select a use desired tuner in a retrieval order. The recording manager 122 may obtain a use frequency and may select a use desired tuner according to the use frequency.

For manual selection by a recorder user, information regarding tuners available at a recording date and time may be manifested to the recorder user. For example, when receiving a recording date and time according to an input indication of a recorder user, the recording manager 122 retrieves a tuner available at the recording date and time and receives the use reservation information 11a, 21a from the tuner controller 11, 21 for an available tuner, based on the retrieval result. The recording manager 122 may display the use reservation information and recording schedule (a recording channel, a recording program name, etc.) of each tuner 13, 23, based on the user reservation information 11a, 21a and the recording schedule 12b. In that case, the recorder user selects a use desired tuner, based on the displayed use reservation information, and thus indicates the inputting of it.

In the present embodiment, since the video/audio recording system includes two receivers (tuners 13 and 23), the recording manager 122 receives "1" or "2" as a desired recording count N. In the present embodiment, the case will be described below where the recording manager 122 receives "2" as a desired recording count N.

When receiving a recording date and time and a desired recording count N, the recording manager 122 acquires the use reservation information 11a, 21a from each tuner controller 11, 21 and specifies the tuner 13, 23 (to which a tuner use right is not set) available at the recording date and time, based on the captured use reservation information 11a, 21a. The recording manager 122 obtains the number of tuners available at the recording date and time (step S12). For example, the recording manager 122 requires and captures the use reservation information 11a from the tuner controller 11 in the receiving/recording device 10. The recording manager 122 requires and thus receives the use reservation information 21a from the tuner controller 21 in the receiving device 20 via the communication network.

The recording manager 122 judges whether or not the tuners 13 and 23 are available at a recording data and time, based on the captured use reservation information 11a, 21a. When the tuners 13 and 23 are available, the recording manager 122 determines the number of available tuners to "2". When one of the tuners 13 and 23 is in a use reservation state, the recording manager 122 determines the number of available tuners to "1". Moreover, when both the tuners 13 and 23 are already in a use reservation state, the recording manager 122 determines the number of available tuners to "0".

When the number of acquired available tuners is more than a desired recording count N, the recording manager 122 determines the desired recording count N as a content recording count M and determines a specific available tuner as a tuner for recording. For example, when both the tuners 13 and 23 are available, the recording manager 122 determines the desired recording count N[2] as the recording count M, without any change, and determines "tuner 13" and "tuner 23", as the recording tuner.

When the number of available tuners does not reach the desired recording count N, the recording manager 122 adjusts the number of contents to be recorded. The recording manager 122 determines the recording count M and tuners used for recording, based on the adjustment result (step S13).

For example, regardless of the desired recording count N, the recording manager 122 determines the number of available tuners as the recording count M. When the number of tuners available in the desired recording count N[2] is "1", the recording manager 122 determines the recording count M to "1", regardless of the desired recording count N[2]. In that case, if only the tuner 23 is available, the recording manager 122 determines "tuner 23" as a recording tuner. Moreover, by assuming, for example, that the tuner in current use cannot be used regardless of the desired recording count N, the recording manager 122.determines the recording count M and a use tuner.

When the tuner 13, 23 is being used in step S13 (for example, a tuner user is viewing a content), the recording date and time may be notified the tuner user to urge a change of use reservation. For example, the recording manager 122 transmits a request for changing use reservation to the receiving device 20, in which the use of the tuner 23 is not permitted at the recording date and time, via a communication network. The tuner controller 21 in the receiving device 20 displays an input window, which urges to input permission or non-permission of a change of use reservation, on the monitor.

FIG. 10 is an explanatory diagram illustrating an input window, which manifests permission or non-permission of use reservation displayed by the receiving device 20. For example, as shown in FIG. 10, the receiving device 20 receives a content from the broadcast station 30 according to an operation of the user of the tuner 23, thus displaying the image 81 included in the content and reproducing audio. The receiving device 20, for example, displays the input window 82 having permission and non-permission of a change of user reservation, together with the image 81, on the monitor, as shown in FIG. 10.

The user of the tuner 23 ascertains the input window 82 having permission and non-permission of a change of use reservation. When judging that a change of use reservation is permitted, the user selects the "permission" button 83 for input indication. Thus, the tuner controller 21 transmits notification information representing permission of a change of use reservation to the receiving/recording device 10 via a communication network according to the input indication by the user. When judging that a change of use reservation is not permitted, the user of the tuner 23 selects the "non-permission" button 84 for input indication. Thus, the tuner controller 21 transmits notification information representing non-permission of a change of use reservation to the receiving/recording device 10 via a communication network according to the input indication.

The recording manager 122 determines the recording count M and an available tuner (hereinafter referred to as use tuner), based on the received notification information. For example, although the use of only the tuner 23 has been already reserved at a recording date and time, the recording manager 122 may receive notification information regarding permission of a change of use reservation from the receiving device 20. Even in such a reservation state, the recording manager 122 determines the recording count M to "2" and determines "tuner 13" and "tuner 23" as available tuners. When receiving notification information regarding non-permission of a change of use reservation from the receiving device 20, the recording manager 122 determines the recording count M to "1" and determines "tuner 13" only as an available tuner.

In step S13, for priority reservation, the recording manager 122 may judge whether or not a priority is given to a reservation indication from a recorder user according to a predetermined priority condition. For example, when there is a tuner in a use reservation state, the recording manager 122 manifests an input window representing whether or not content recording is reserved preferentially, on the monitor in the receiving/recording device 10.

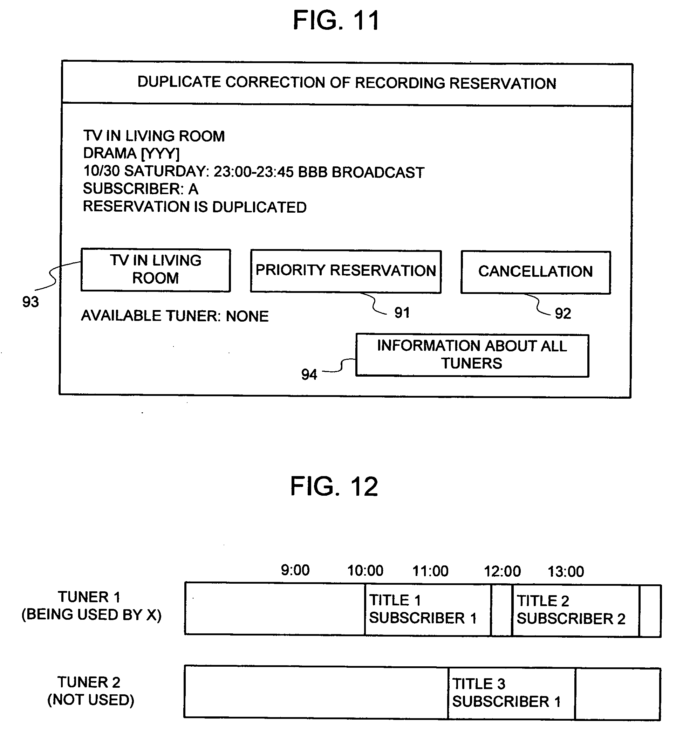

FIG. 11 is an explanatory diagram illustrating an input window representing priority reservation of content recording. FIG. 11 depicts an input window for priority reservation when one of the designated two tuners 13 and 23 is in previous reservation. As shown in FIG. 11, the recording manager 122 controls such that the monitor displays the fact that a use desired tuner has been already reserved at a recording date and time, use reserved program names, channels, subscribers, and others. The recording manger 122 may display on the monitor an input window including information regarding whether or not a tuner is currently in use.

The recorder user ascertains a tuner use reservation state. When wanting preferentially reserving the recording of his desired content, the user selects "priority reservation" button 91 on the input window shown in FIG. 11 and issues input indication. Even when the tuner use reservation has been already made, the recording manager 122 gives a priority to the recording reservation indicated by the recorder user. Thus, the recording manager 122 determines the desired recording count N as a recording count M, without any change, to determine a use tuner. In order to cancel the recording reservation for his desired content, the recorder user selects the "cancel" button 92 on the input window shown in FIG. 11 and issues input indication. Thus, the recording manager 122 ends the process of canceling the recording reservation.

To indicate a change a tuner for recording, the recorder user selects the tuner change button 93. The recording manager 122 changes a use desired tuner according to an input indication from the recorder user. In that case, when a user, for example, selects the "information on all tuners" button 94 on the input window, the recording manager 122 displays all tuner use reservation information included in the video/audio recording system. For example, when there are available tuners, the recording manager 122 displays the names of them. The user ascertains use reservation information about all tuners and indicates a change to an unoccupied tuner. Thus, the recording manager 122 changes the tuner desired by the user. For example, the recording manager 122 displays reservation window information representing the reservation status of each tuner 13, 23, shown in FIG. 12, on the monitor. The recorder user checks the displayed reservation window information and indicates an entry of priority reservation and tuner change.

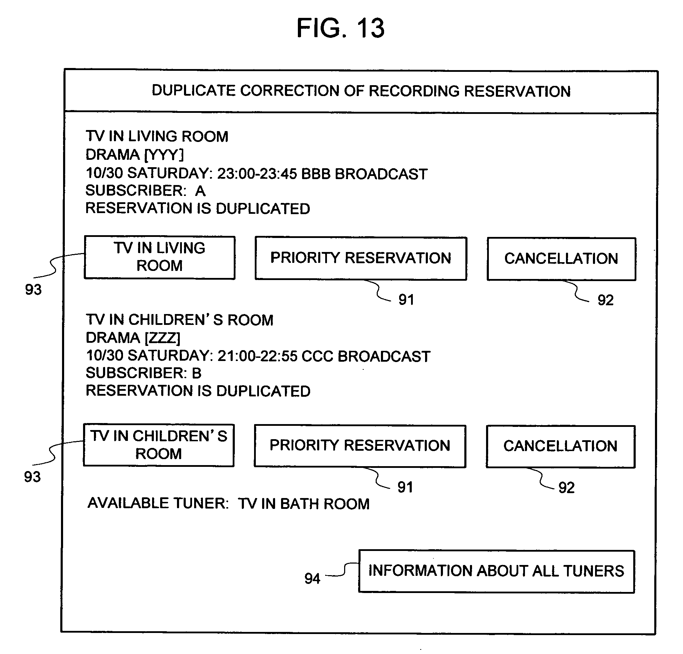

FIG. 13 is an explanatory diagram showing another example of an input window for a priority reservation of content recording. FIG. 13 shows an example of an input window of priority reservation when the use of two tuners 13 and 23 designated is in a reservation state. As shown in FIG. 13, when the use of the tuners 13 and 23 is in a previous reservation, the recording manager 122 controls such that the monitor displays the fact that each tuner 13, 23 is in a reservation state at a recording date and time, program names in use reservation, channels, subscribers, etc. Like the example shown in the example in FIG. 11, the recording manager 122 controls the tuner 13, 23 to make priority recording, cancel recording reservation, and change a use desired tuner, according to the operation of the recorder user.

The recording manager 122 may make a priority reservation, using a predetermined priority. For example, by setting a priority of a recording program (content) based on a tuner user, content, or content viewing frequency, the recording manager 122 may make priority reservation according to the priority. For example, when a tuner user uses a tuner continuously at low priority (in this example, at the viewing frequency less than a threshold value), the recording manager 122 does not perform recording. However, when a user does not use a tuner at a recording date and time, the recording manager 122 may perform recording. When a user uses a tuner continuously at high priority (in this example, at a viewing frequency more than a threshold value), the recording manager 122 may control so as to issue warning for the tuner user.

When determining the recording count M and the use tuner, the recording manager 122 updates the recording schedule 12b. For example, the recording manager 122 stores a specified recording date and time, recording channels, program names, a recording count M, and tuner information to be used, into the recording schedule 12b. The recording manager 122 indicates the tuner controller 11, 21 in a determined available tuner to update the use reservation information 11a, 21a. The tuner controller 11 or 21 updates the use reservation information 11a, 21a according to an instruction from the recording manager 122 (step S14). That is, the recording manager 122 sets a tuner use right to the tuner controller 11, 21 and secures the tuner 13, 23 used for reservation recording.

For example, the recording manager 122 outputs or transmits notification information, including a recording date and time and a recorder user name, to the tuner controller 11, 21. The tuner controller 11, 21 stores the use date, use time, user name (in the present example, a recorder user), or use status to the use reservation information 11a, 21a, based on the input or received notification information. When a tuner user makes a use reservation change or a priority reservation by the recorder user in step S13, the recording manager 122 controls the tuner controller 11, 21 to update use reservation information 11a, 21a, based on the recording date and time of recording reservation or the use user name, involved in the use reservation change or in the priority reservation.

As described above, by carrying out the process from the step S11 to the step S14, multiple recording a content to which a copy-once signal is added can be reserved.

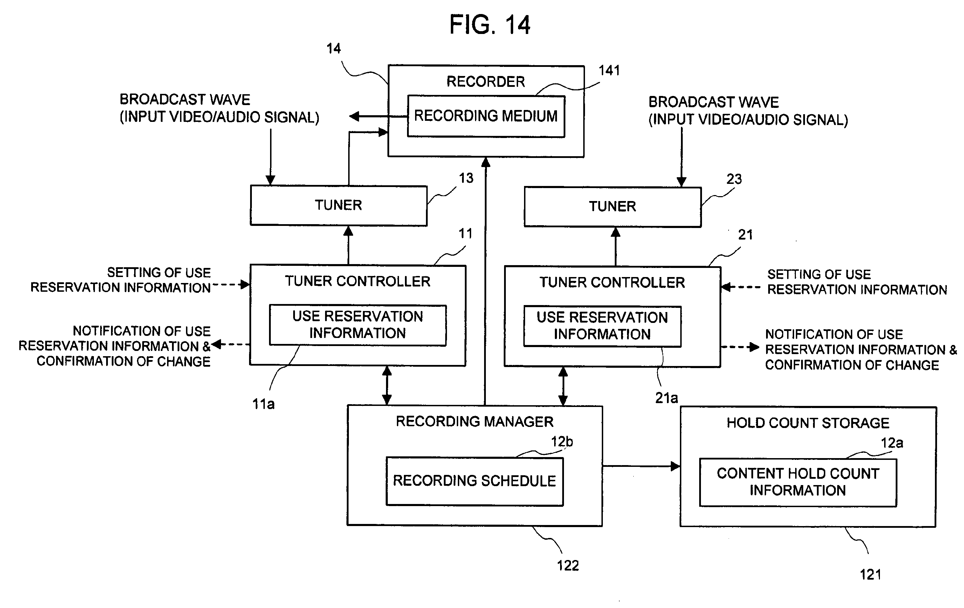

The recording manager 122 judges whether or not a reserved recording date and time has reached, based on the recording schedule 12b. The recording manager 122 indicates the tuner controller 11, 21 and the recorder 14 to start the recording of a specified content (step S15). FIG. 14 is an explanatory diagram illustrating a flow of information (various indication information or contents) regarding the recording of reserved contents.

At a recording date and time, the recording manager 122 indicates the tuner controller 11 or 12 to start the reception of contents. In the present embodiment, the case where the recording manager 122 indicates the tuner controller 11 to start the reception of contents will be explained. The tuner controller 11 makes the tuner 13 begin the receiving of a content. The tuner 13 outputs the received content to the recorder 14.

Upon the recording date and time, the recording manager 122 indicates the recorder 14 to start the recording of a content. The recorder 14 begins to record (videotape) a content output from the tuner 13 to the storage 14.

The tuner controller 21 controls such that the use of the tuner 23 is not permitted during content recording. For example, even if a tuner user operates the receiving device 20, the tuner controller 21 controls such that an input indication from the tuner user is not accepted during content recording, based on the use reservation information 21a.

When the content is stored into the recording medium 141 after recording, the recording manager 122 indicates the hold count storage 121 to update the content hold count information 12a. The hold count storage 121 updates the content hold count information 12a according to the recording manager 122 (step S16). For example, the hold count storage 121 records the information regarding the holding of two copy-not-permitted contents, into new content hold count information 12a.

In execution of the above-mentioned process, the receiving/recording device 10 actually records only one content but can be handled as if two same contents are being held. The hold count storage 121 manages the number of the held and recorded contents based on the content hold count information 12a.

For example, in order to hold a content in a ground wave digital broadcasting into the DVD recorder while it is recorded into the HDD recorder, the receiving/recording device 10 moves the content to be recorded into the recorder 14, to the DVD recorder through an operation of the recorder user. In that case, the receiving/recording device 10 copies a content recorder by the recorder 14 to the DVD recorder. The recording manager 122 indicates the hold count storage 121 to update the content hold count information 12a. The hold count storage 121 changes information about "two copy-not-permitted contents held" included in the content hold count information 12a into information about "one copy-not-permitted content held", according to an instruction from the recording manager 122. By doing so, the receiving/recording device 10 actually records one content but can handle it as if one of two contents held has been moved to the DVD recorder.

In the step S15, a user (for example, the user of the tuner 23), except the recorder user, may use the tuner 23 through interruption during reservation recording. In that case, the tuner controller 21, for example, manifests use reservation information including that the tuner 23 is being currently used for reservation recording, on the monitor. The user of the tuner 23 ascertains the use reservation information displayed and indicates a change of the use reservation information 21a when judging using the tuner 23 even during reservation recording. Thus, the tuner controller 21 changes the use reservation information 21a according to a change indication by the user of the tuner 23.

When the use reservation information is changed during recording, the hold count storage 121 may record information on a content hold count, different after and before a change of the use reservation information, to the content hold count information 12a. For example, the hold count storage 121 may record information regarding that two copy-not-permitted contents are held before a change of the use reservation information and may record information regarding that one same copy-not-permitted content is held after a change of the use reservation information.

As described above, according to the present embodiment, when being instructed to record plural same contents, the receiving/recording device 10 obtains tuner use rights for tuners of the same number as the recording count of contents. The receiving/recording device 10 records the content received by any one of acquired tuners. The receiving/recording device 10 records the content hold count information 12a including the number of acquired tuners as a content hold count. For that reason, the receiving/recording device 10 actually records only one content but can handle it as if plural same contents are held. Accordingly, it is not needed to record plural same contents. Even if copy restriction is imposed on the content for the copyright protection, the receiving/recording device 10 can record the content by effectively using the recording area. Moreover, even if plural recorders are not prepared, plural same contents can be held.

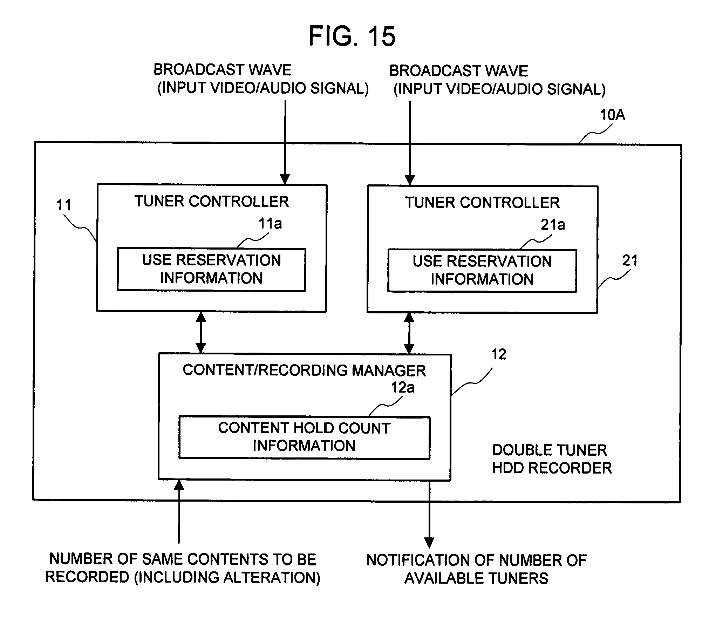

In the present embodiment, the case has been explained where the video/audio recording system includes the receiving/recording device 10 and the receiving device 20, as shown in FIG. 7. However, the concrete configuration of the video/audio recording system is not limited to only the present embodiment. For example, the recorder and all receivers may be combined integrally as one unit. FIG. 15 is a block diagram illustrating another specific configuration of the video/audio recording system shown in FIG. 4. As shown in FIG. 15, the video/audio recording system is realized by the receiving/recording device 10A including the content/recording manager 12 and two tuner controllers 11 and 21.

In the example shown in FIG. 15, the receiving/recording device 10A is, for example, a double tuner HDD recorder. In that case, since the recorder and each receiver are integrally configured, the receiving/recording device 10A sets and manages collectively use reservation information of each tuner. The user, or the user of the double tuner HDD recorder, the receiving/recording device 10A sets and changes the tuner use right according to the operation of a recorder user and manages content recording control and content hold count.

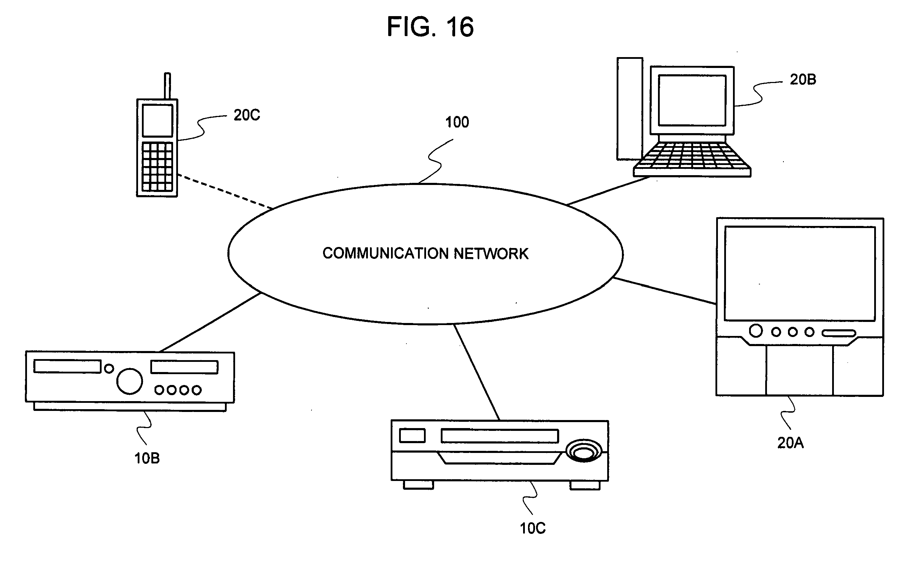

The video/audio recording system may include plural receiver/recorders and plural receivers, linked via a network. FIG. 16 is a block diagram showing a specific configuration of a video/audio recording system linked via a network. As shown in FIG. 16, the video/audio recording system includes, as the receiving/recording device 10, a tuner built-in DVD/HDD recorder 10B and a tuner built-in video recorder 10C. The video/audio recording system includes as the receiving device 20, a tuner built-in television receiver 20A, a tuner built-in personal computer 20B, and a tuner built-in cellular telephone 20c. The receiving/recording device 10B or 10C and the receiving device 20A, 20B, or 20C are linked via a communication network 100 such as the Internet or LAN.

### Embodiment 2:

Next, a second embodiment of the present invention will be explained below by referring to the attached drawings. In the first embodiment, the receiving device side with a tuner manages the use right and the recording device side performs content control and recording control. However, in the explanation of the present embodiment, the server performs use right control, content control, and recording control, collectively. The video/audio recording system can include plural recorders and plural receivers. However, in the present embodiment, the case where the video/audio recording system includes as a most fundamental configuration one recorder and two receivers, in a manner similar to that in the first embodiment.

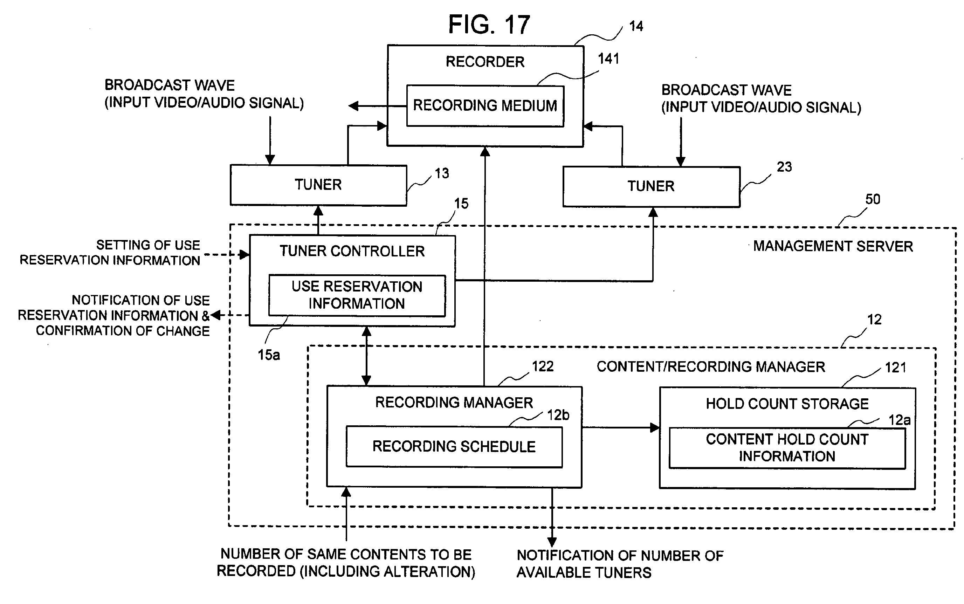

FIG. 17 is a block diagram illustrating a different configuration of a video/audio recording system. As shown in FIG. 17, the video/audio recording system includes two tuners 13 and 23, a recorder 14, and a management server 50.

The tuner (receiver) 13, 23, which is specifically a tuner incorporated in a receiver such as a television receiver, receives contents with copy-once signals, which are broadcast by the broadcast station 30. In the present embodiment, when a tuner user makes an entry indication of the use reservation of the tuner 13, 23, each receiver transmits information about the use reservation content to the management server 50, according to the tuner user's entry indication.

Specifically, the recorder 14 is realized with a recorder, such as a HDD recorder, a DVD recorder, or a video recorder. In the present embodiment, the recorder 14 records the content received by the tuner 13, 23 into the recording medium 141, according to an indication from the management server 50.

In the present embodiment, each receiver, including the tuner 13, 23, is linked to the recorder 14 and the management server 50 via a communication network such as the Internet or LAN.

In the example shown in FIG. 17, the management server 50 includes a tuner controller 15 and a content/recording manager 12, which includes a recording manager 122 and a hold count storage 121. However, the content/recording manager 12 may be configured with another unit and may include only the tuner controller 15. In such a case, the tuner controller 15 is operatively connected to the content/recording manager 12 via a communication network.

In the explanation mentioned below, the management server 50 stores the recording schedule 12b and the content hold count information 12a therein. Such information may be recorded in a storage (not shown) outside the management server.

The management server 50 is specifically an information processing device such as a personal computer. As shown in FIG. 17, the management server 50 includes the tuner controller 15 and the content/recording manager 12. The management server 50 may be realized with a HDD recorder, a DVD recorder, or a video recorder, which has a server function.

The tuner controller 15 is specifically realized with the CPU and the storage in the management server 50, which operates according to a program. The tuner controller 15, as shown in FIG. 17, stores the use reservation information 15a, or information representing the use reservation state of each tuner 13, 23. The tuner controller 15 manages the utilization of the tuners 13 and 23, based on the use reservation information 15a. In the present embodiment, when receiving use reservation content information from each receiver, the tuner controller 15 sets the tuner use right by registering and changing the received use reservation content information to the use reservation information 15a.

The present embodiment differs from the first embodiment in which each receiver side formed of the tuners 13 and 23 manages the user reservation information. In the present embodiment, the management server 50 stores the use reservation information and manages the use rights of the tuners 13 and 23, collectively. However, each receiver, including the tuners 13 and 23, stores only the information representing whether or not the tuner 13, 23 is available. The fundamental process that tuner controller 15 manages the use of the tuners 13 and 23 is equivalent to the use management process implemented by the tuner controller 12, 21 in the first embodiment.

The content/recording manager 12 is specifically realized with a CPU and a storage in the management server 50 operated according to a program. The content/recording manager 12 includes the hold count storage 121 and the recording manager 122, in a manner similar to that in the first embodiment. Moreover, like the first embodiment, the hold count storage 121 stores the content hold count information 12a and manages contents to be stored in the recorder 14, based on the content hold count information 12a.

In a manner similar to that in the first embodiment, the recording manager 122 stores the recording schedule 12b and performs the recording management based on the recording schedule 12b. In the present embodiment, when being instructed to record plural same contents, the recording manager 122 is secured the tuners 13, 23 to be used for recording, based on the use reservation information 15a of the tuner controller 15.

In the present embodiment, the basic process implemented by the hold count storage 121 and the recording manager 122 is similar to that in the first embodiment.

In the present embodiment, the storage in the management server 50 stores various programs that are used to record video/audio contents. For example, the storage in the management server 50 stores a video/audio management program that instructs the computer to execute the step of securing, when an indication is issued to record plural same contents, the content receivers of the same number as the number of recorded contents, the step of recording the content received by any one of the secured content receivers, into the recorder, the step of storing the content hold count information including as a content hold count the number of secured content receivers, and the step of managing the number of contents held that is stored by the recorder based on the stored content hold count information.

Next, the operation of the present embodiment will be explained below. In the present embodiment, according an instruction for a use reservation entry by a tuner user, each receiver including the tuners 13 and 23 always transmits information about use reservation contents to the temporary management server 50 via a communication network. The tuner controller 15 in the management server 50 always updates the use reservation information 15a based on the information about the received use reservation content.

When wanting recording a content, the user (hereinafter referred to as a server user) of the management server 50 operates the management server 50 to instruct the inputting of designation information, such as content recording date and time, desired recording count N, etc. By doing so, the management server 50 enters the content recording date and time and the desired recording count N, according to the entry designation by the recorder user.

The recorder user may enter the recording date and time and the desired recording count N. In such a case, the recorder 14 enters the content recording date and time and the desired recording count N, according to the entry designation from the recorder user, and then transmits them to the management server 50 via the communication network.

When receiving the recording date and time and the desired recording count N, the recording manager 122 in the management server 50 receives the use reservation information 15a from the tuner controller 15 to obtain the number of tuners, to which the use right is not set at the recording date and time. When the number of tuners, to which the obtained use right is not set, does not reach the desired recording count N, the recording manager 122 adjusts the content recording count and thus determines the recording count M and the available tuner, based on the adjustment result. The basic process for obtaining the number of tuners, to which a use right is not set, and the basic process for determining the recording count M and the available tuner are similar to those in the first embodiment (steps S12 and S13 shown in FIG.-8).

For adjustment of the recording count, the recording manager 122, for example, determines as the recording count M, the number of tuners judged that the use right is not set, regardless of the desired recording count N. For example, the recording manager 122 may notify the tuner user of the recording date and time and may urge a change of use reservation. In such a case, the recording manager 122, for example, receives the notification information about permission or rejection of use reservation change from each receiver via the communication network and determines the recording count M and the available tuner, based on the received notification information.

For adjustment of the recording count, preferential reservation may be made in the server user's judgement. For example, the recording manager 122 manifests an input window on permission or rejection of preferential reservation of content recording, on the monitor in the management server 50.

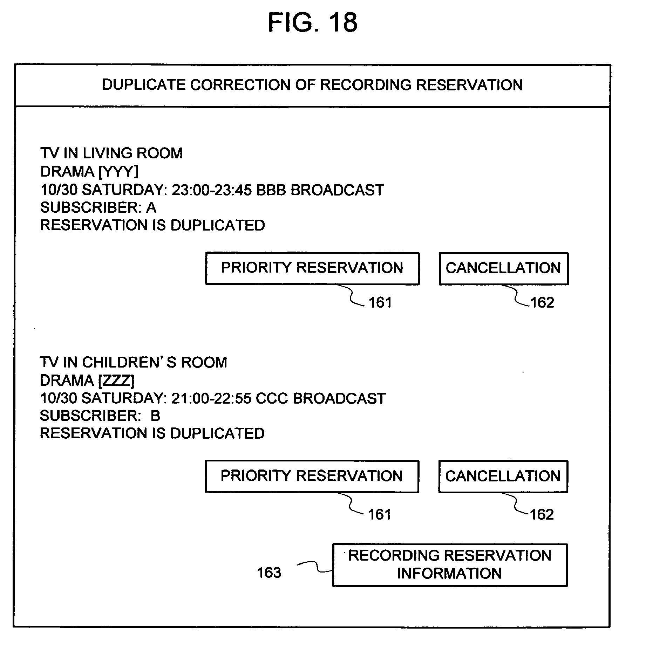

FIG. 18 is an explanatory diagram illustrating another example of an input window on preferential reservation of content recording. As shown in FIG. 18, the recording manager 122 instructs to display duplicate use reservation at a recording date and time, and program names, channels, and subscribers, which are already in a reserved state. The present embodiment does not control a use right for each tuner. As shown in FIG. 18, the recording manager 122 does not display the tuner change button in the first embodiment.

When ascertaining the use reservation state displayed and preferentially reserving the recording of a desired content, the server user selects, for an entry indication, the "priority reservation" button 161 on the input window shown in FIG. 18. Thus, the recording manager 122 provides a priority to the recording reservation by a server user even if there are duplicate use reservations and determines the desired recording count N as the recording count M, as it is, thus determining the available tuner. When the recording reservation of a desired content is canceled, the server user selects, for an entry indication, the "cancel" button 162 on the input window shown in FIG. 18. Thus, the recording manager 122 ends the recording reservation canceling process.

By instructing the management server 50 to display recording reservation information, the server user may change the setting of the recording reservation. In this case, for an entry indication, the server user, for example, selects the "recording reservation information" button 163 on the input window shown in FIG. 18. Thus, the recording manager 122 manifests a recording reservation information window on the monitor to change the setting of recording reservation. For example, the recording manager 122 manifests the recording reservation information window shown in FIG. 19 on the monitor in the management server 50. When the server user issues an entry indication by clicking a mouse on the recording reservation information window shown in FIG. 19, the recording manager 122 changes the setting of recording reservation according to the server user's entry indication.

When the recording count M and the available tuner are determined, the recording manager 122 updates the recording schedule 12b and the tuner controller 15 updates the user reservation information 15a. When the designated recording date and time comes, the tuner controller 15 transmits indication information regarding the beginning of reception to the receiver via a communication network, thus instructing the tuner 13 to begin receiving the content. At the recording date and time, the recording manager 122 transmits the indication information regarding the beginning of recording, to the recorder 14 via the communication network, thus instructing the recorder 14 to begin storing (recording) the content transmitted from the tuner 13. The tuner controller 15 controls to inhibit the use of the tuner 23, which is not used for content recording during content recording. When the content is recorded on the recording medium 141 after the ending of the recording, the hold count storage 121 updates the content hold count information 12a according to the indication of the recording manager 122.

In the present embodiment, the basic process of updating the use reservation information 15a, recording the content at a recording date and time, and updating the content hold count information 12a is similar to the process in the first embodiment (from the step S14 to the step S16 in FIG. 8).

As described above, according to the present embodiment, by using the management server 50 that collectively manages the use right or recording of each tuner and contents, contents can be recorded, with the recording area effectively used, even when copy restriction is imposed on the contents for copyright protection.

When a tuner use right is managed for each tuner, reserved recording or content viewing cannot be often performed, even if a specific tuner is intensively used but other tuners are in an available state. According to the present embodiment, since the management serve 50 is comprehensively managed the tuner use right of each tuner, control can be made such that the use of each tuner is not localized so that each tuner can be used effectively.

### [INDUSTRIAL APPLICABILITY]

The present invention can be utilized to applications for multiple recording a content on which copy restriction is imposed. Particularly, when a plurality of same contents, each to which a copy-once signal is added, are held in the ground wave digital broadcasting or BS digital broadcasting, contents can be effectively recorded with the recording area effectively used.

## Claims

1. A video/audio recording system for recording a content which includes either video or audio or both and on which copy restriction is imposed, wherein the number of receivers for said content, available at a time of recording said content, is stored as the number of copyable times.

2. A video/audio recording system for recording a content which includes either video or audio or both and on which copy restriction is imposed, said video/audio recording system comprising,
a plurality of content receivers each for receiving a content;
receive count securing means for securing content receivers of the same number as the number of contents to be recorded when recording plural same contents is instructed;
a content recorder for recording a content;
a hold count storage for storing content hold count information representing the number of contents held that is recorded by said content recorder; and
a hold count manager for managing the number of contents held that is recorded by said content recorder, based on the content hold count information stored by said hold count storage;
said content recorder recording a content received by any one of content receivers secured by said receive count securing means; said hold count storage storing content hold count information including as a content hold count the number of content receivers secured by said receive count securing means.

3. The video/audio recording system defined in Claim 2, further comprising content copying means for copying a content recorded by said content recorder to an external recorder and wherein when said content copying means copies content to said external recorder, said hold count manager subtracting the number of contents, copied by said external storage, from a hold count representing content hold count information stored by said hold count storage.

4. The video/audio recording system defined in Claim 2 or 3, further comprising use right setting means for setting a receiver use right or a right for utilizing said content receiver, and wherein when recording plural same contents is instructed, said receive count securing means instructs said use right setting means to set a receiver use right to content receivers of the same number as the number of contents to be recorded.

5. The video/audio recording system defined in Claim 4, further comprising a use reservation information storage for storing use reservation information representing a use reservation status of said content receiver, and wherein said use right setting means sets a receiver use right by adding a new use reservation content to use reservation information stored by said use reservation information storage, according to a request for content receiver use reservation.

6. The video/audio recording system defined in Claim 5, wherein said use reservation information storage stores, as use reservation information, use data and time at which a content receiver is used and a use subject, or a subject using said content receiver, in one-to-one correspondence, and wherein said use right setting means secures a receiver use right of said use subject by controlling such that a use request for said content receiver from a user, except said use subject, is not accepted at said use date and time, based on said use reservation information.

7. The video/audio recording system defined in any one of Claims 4 to 6, wherein said receive count securing means specifies a content receiver, to which a receiver use right is not set by said use right setting means, when recording plural same contents is instructed, judges whether or not said specified recording number is less than or equal said specified number of content receivers, secures content receivers of the same number as said specified recording number when it is judged that said specified recording number is less than or equal the number of specified content receivers, determines the number of content receivers to be secured according to a predetermined condition when it is judged that said specified recording number is larger than the number of specified content receivers, and secures content receivers of said determined number.

8. The video/audio recording system defined in Claim 7, wherein when judging that a specified recording number is larger than the number of specified content receivers, said receive count securing means secures said specified content receivers.

9. The video/audio recording system defined in Claim 7, wherein said receive count securing means judges whether or not a priority is given to an instructed content according to a predetermined priority condition when judging a specified recording number is larger then the number of specified content receivers; instructs a use right setting means to change a receiver use right, which has been already set to the content receiver, when judging that a priority is given to the specified content; and thus secures content receivers of the same number of as the specified recording number.

10. A content management server in a video/audio recording system for recording a content which includes either video or audio or both and on which copy restriction is imposed, wherein said content management server controls such that the number of receivers for said content, available at a time of recording said content, is stored as the number of copyable times.

11. A content management server in a video/audio recording system for recording a content which includes either video or audio or both and on which copy restriction is imposed, wherein said content management server controllably reserves a receiver for said content and stores as the number of copyable times the number of said content receivers available at the time of recording said content.

12. A content management server in a video/audio recording system including at least a plurality of content receivers for receiving a content, on which copy restriction is imposed, including either video or audio or both, and a recorder for recording said content, said content management server comprising,
receive count securing means for securing content receivers of the same number as the recording number of contents when recording plural same contents is specified;
a hold count storage for controlling such that content hold count information representing the number of contents held that is stored by said content recording means is stored; and
a hold count manager for managing the number of contents held that is stored by said content recorder based on content hold count information controlled to be stored by said hold count storage;
said content recorder controlling such that a content received by any one of content receivers secured by said receive count securing means is recorded; said hold count storage controlling such that content hold count information including as a content hold count the number of content receivers secured by said receive count securing means is stored.

13. The content management server defined in Claim 12, further comprising use right setting means for setting a receiver use right or a right for utilizing said content receiver, and wherein when recording of plural same contents is instructed, said receive count securing means secures content receivers by setting a receiver use right corresponding to content receivers of the same number as the recording number of contents, to said use right setting means.

14. A video/audio recording device, which records a content, in a system including a plurality of content receivers, each which receives a content which includes either video or audio or both and on which copy restriction is imposed, said video/audio recording device comprising,
receive count securing means for securing content receivers of the same number as the content recording number when recording plural same contents is instructed;
a content recorder for recording a content;
a hold count storage for storing content hold count information representing the number of contents held that is stored by said content recorder; and
a hold count manager for managing the number of contents held that is stored by said content recorder, based on content hold count information stored by said hold count storage;
said content recorder recording a content received by
any one of content receivers secured by said receive count securing means; said hold count storage storing content hold count information including, as a content hold count, the number of content receivers secured by said receive count securing means.

15. A receiving device, which receives a content, in a video/audio recording system, which records said content which includes either video or audio or both and on which copy restriction is imposed, said receiving device comprising,
content receiver for receiving said content; and
use right setting means for setting a receiver use right, or a right for using said content receiver.

16. The receiving device in a video/audio recording system defined in claim 15, further comprising a use reservation information storage for storing use reservation information representing a use reservation status of said content receiver, and wherein
said use reservation information storage stores, as use reservation information, use data and time at which said content receiver is used, and a use subject, or a subject using said content receiver, in one-to-one correspondence, and
wherein said use right setting means securing a receiver use right of said use subject by controlling such that a use request for said content receiver from a user, except said use subject, is not accepted at said use data and time, based on said use reservation information.

17. A recorder, which receives and records a content, in a video/audio recording system, which records said content which includes either video or audio or both and on which copy restriction is imposed, comprising:
a content receiver for receiving said content; and
use right setting means for setting a receiver use right, or a right for using said content receiver.

18. A video/audio recording method for recording contents, in a system including a plurality of content receivers, each which receives a content which includes either video or audio or both and on which copy restriction is imposed, said video/audio recording method comprising the steps of:
securing content receivers of the same number as the content recording number when recording plural same contents is instructed;
recording a content received by any one of said content receivers secured;
storing content hold count information including, as content hold count, the number of said content receivers secured; and
managing said recorded content hold count, based on content hold count information stored.

19. The video/audio recording method defined in Claim 18, further comprising the step of, when recording of plural same contents is instructed, setting a receiver use right, or a right for using said content receiver, corresponding to content receivers of the same number as the recording number of contents, to secure said content receiver.

20. A video/audio management program for managing contents, in a recording system including a plurality of content receivers, each which receives a content which includes either video or audio or both and on which copy restriction is imposed, and a recorder for recording said content, said video/audio management program instructing a computer to execute the steps of:
securing content receivers of the same number as the content recording number when recording plural same contents is instructed;
recording a content received by any one of said
content receivers secured, into said recorder;
storing content hold count information including, as content hold count, the number of said content receivers secured; and
managing said content hold count recorded in said storage, based on said content hold count information stored.
